# EUROPEAN PATENT APPLICATION

(11) **EP 2 940 618 A1**
(43) Date of publication of application: **04.11.2015**
(21) Application number: 14166444.1
(22) Date of filing: 29.04.2014
(51) Int. Cl.: G06F 21/31, G06F 21/34, H04L 29/06, H04W 12/06

(54) **Method, system, user equipment and program for authenticating a user**

(71) Applicant: Deutsche Telekom AG, 53113 Bonn (DE)
(72) Inventor: Wirths, Wolfgang, 53125 Bonn (DE); Schenk, Volker, 53881 Euskirchen (DE)
(74) Representative: Schwöbel, Thilo K.

(57) **Abstract**

The present invention relates to a method and system for authenticating a user towards an application server, the user having a first client device being connected to the application server, wherein a second client device is used for authentication purposes of the user towards the application server, wherein the second client device is connected to an authentication server and comprises a secure element being able to communicate with the authentication server, wherein the method comprises the steps of:
-- in a first step, the application server transmits a first authentication request information to the authentication server, the authentication request information comprising an identification information assigned to the secure element,
-- in a second step, subsequent to the first step, the authentication server transmits a second authentication request information to the secure element,
-- in a third step, subsequent to the second step, a first authentication answer information is generated by the secure element and transmitted to the authentication server,
-- in a fourth step, subsequent to the third step, a second authentication answer information is transmitted by the authentication server to the application server, thereby authenticating the user.

## Description

### BACKGROUND

The present invention relates to a method for authenticating a user towards an application server, the user having a first client device being connected to the application server, wherein a second client device is used for authentication purposes of the user towards the application server.

Furthermore, the present invention relates to a system for authenticating a user towards an application server, the user having a first client device being connected to the application server, wherein a second client device is used for authentication purposes of the user towards the application server.

Additionally, the present invention relates to a user equipment and a secure element for authenticating a user towards an application server, the user having a first client device being connected to the application server, wherein the user equipment is used as a second client device for authentication purposes of the user towards the application server.

Furthermore, the present invention relates to a program comprising a computer readable program code, as well as a computer program product to perform the inventive method.

The internet and especially the World Wide Web (WWW) has permeated almost all aspects of our lives - from buying cameras to buying real estate, and from reading a newspaper to watching a movie. Unfortunately, the web can also be a very dangerous place where even savvy users can compromise highly sensitive information or suffer substantial financial loss.

Hence, providing secure access to web applications is an important security problem. However, this problem is particularly challenging for at least two reasons. First, the Internet is inherently insecure because it is a public network. As a result, systems and techniques to provide secure access to web applications over the Internet need to address a wide variety of security issues. Second, the web owes much of its phenomenal success to its user-friendly interface, especially the web-browser. Hence, it is important to ensure that a security solution is both highly secure and user friendly.

Usually, users use a variety of different services or applications via the World Wide Web, e.g. social networks, banking applications, download services for media such as movies or the like. For many such services and applications offered on the internet or by using the internet, the authentication of the user is necessary. Typically, such an authentication is performed using some type of a user name and some type of a password, i.e. a pair of a username and a password, also called user credentials. In order to provide an increased level of security for such combinations of a user name and a password, it is advised to use a different combination for every internet application and/or every internet service the user is requesting. Together with the multiplication of such applications and services, this requirement leads to an increased number of such combinations of a user name and a password to be memorized by the user. For reasons of convenience of the users, such user credentials often are identical or very similar for different services or are "managed" by the user in an ad-hoc fashion relying on paper-based notes. Using identical user credentials for different services or applications reduces the level of security such combination provides, as in case that one combination of user name and password is hacked or otherwise compromised, not only one application or web service is concerned but a plurality of such applications or services. Alternatively, users may rely on special software programs such as "KeePass", "pwsafe" or the like that provide a password administration functionality without the need of memorizing different user credentials. Such password administration programs provide the possibility to store different pairs of user credentials in a secure manner (usually encrypted) such that the relevant username and password are retrieved in case a specific service is to be used. In case such password administration programs are used on a mobile device, a user often needs to retrieve the credentials on one device and input the retrieved credentials on another device. Furthermore, single-sign-on services (such as "Kerberos", "Liberty Alliance", or "OpenID") are known that provide such functionality in a much simpler manner. However, the use of these services usually require a uniform governance usually only present within corporate structures.

Furthermore, authentication based on requiring a user to input user credentials via some user interface is known to have an intrinsic vulnerability in view of phishing or man in the middle/browser attacks, or in view of using key loggers.

### SUMMARY

An object of the present invention is to overcome - at least partly - the limitations of the current state of the art, and to provide a simple and secure authentication functionality for the authentication of a user towards an application server in an easy, user-friendly and convenient manner providing a comparably high level of security against attacks and requiring little or no technical skills from the user and no special hardware other than a second client device, typically in the form of a normal mobile phone, having typically some kind of a user interface.

The object of the present invention is achieved by a method for authenticating a user towards an application server, the user having a first client device being connected to the application server, wherein a second client device is used for authentication purposes of the user towards the application server, wherein the second client device is connected to an authentication server and comprises a secure element being able to communicate with the authentication server, wherein the method comprises the steps of:
-- in a first step, the application server transmits a first authentication request information to the authentication server, the authentication request information comprising an identification information assigned to the secure element,
-- in a second step, subsequent to the first step, the authentication server transmits a second authentication request information to the secure element,
-- in a third step, subsequent to the second step, a first authentication answer information is generated by the secure element and transmitted to the authentication server,
-- in a fourth step, subsequent to the third step, a second authentication answer information is transmitted by the authentication server to the application server, thereby authenticating the user.

According to the present invention, it is advantageously possible to easily and conveniently use a multitude of internet services or applications
-- without the need to memorize a multitude of different user credentials,
-- without the need of administering the multitude of different user credentials by means of a program providing a password administration functionality and hence the need to transfer the retrieved user credentials from the password administration program to an internet application (or a browser program),
-- without the security risks inherent in using one and the same user credentials for a plurality of different internet services or applications, and
-- without the security risks associated with storing important user credentials openly (or weakly concealed) on paper-based notes.

According to the present invention, besides the use of a first client device by means of which a request for authentication of a user is directed to an application server, a second client device is used for authentication purposes of the user towards the application server. The second client device is connected to an authentication server, and the authentication server is connected to the application server via a secure transmission channel.

According to the present invention, the second client device comprises a secure element being able to communicate with the authentication server, typically - but not necessarily - using a public land mobile network as transmission channel with the authentication server.

According to the inventive method, at least a step of transmitting, by the application server, of a first authentication request information to the authentication server is performed, wherein the authentication request information comprises an identification information assigned to the secure element. Furthermore, in a subsequent step, the authentication server transmits a second authentication request information to the secure element. In a further subsequent step, a first authentication answer information is generated by the secure element and transmitted to the authentication server, and in a final step, a second authentication answer information is transmitted by the authentication server to the application server, thereby authenticating the user.

It is thereby advantageously possible according to the present invention, to authenticate the user towards the application server while separating (or decoupling) the authentication process steps from the interaction with the application server, and still provide a user friendly and convenient as well as secure authentication process.

According to the present invention, a key logger software or key logger hardware activated and used (with or without the consent or even knowledge of the user) with or at the first client device - typically a personal computer or a tablet computer or another portable, mobile or stationary computing device - is not able to detect any credentials like user names and/or passwords as the authentication of the user towards the application server is not performed on the first client device but on a separated second client device with a secure element. Typically, the second client device is connected (via the authentication server) to the application server using a different communication channel than the communication channel by means of which the first client device is connected to the application server. However, according to the present invention, it is possible that, at least partly, a common communication channel is used for, on the one hand, the communication link between the first client device and the application server, and, on the other hand, the communication link between the second client device and the authentication server.

Due to the fact that according to the authentication method according to the present invention, no sensitive data, such as credentials, have to be inputted in a user interface of the first client device, it is advantageously possible according to the present invention that the user can safely use the inventive authentication process also on computing devices that are inherently unsafe, such as public computing devices, e.g. in an internet café, in a hotel or on holidays, or on computing devices that are at least not completely under the control of the user, such as the computing device of a friend or a colleague.

The authentication process according to the present invention is based on the use of the second client device and the secure element of the second client device (or in the second client device), typically a SIM-card (Subscriber Identity Module) or a USIM-card (Universal Subscriber Identity Module) or an alternative realization of a secure element such as a smart card. The secure element comprises a computing means that is able to perform cryptographic calculations.

The use of such a secure element and the associated user interface of the second client device is typically more protected and therefore safer than the use of the first client device to input any user credentials.

By means of using the cryptographic capabilities of the secure element within the second client device and upon reception, by the secure element, of the authentication request information from the authentication server, the secure element is able to generate a first authentication answer information to be transmitted to the authentication server. Thus, the authentication process according to the present invention necessarily requires the use of the second client device, and the use of the secure element. Any misuse of the access to the application server can thus be avoided by means of disabling the functionality at least of the secure element regarding the authentication process.

According to a preferred embodiment of the present invention, it is possible to even increase the security level of the authentication method by means of the secure element requesting, in a fifth step, subsequent to the second step and preceding the third step, an authentication operation of the user, wherein at least one user interface element of the second client device is used for performing the authentication operation, wherein the authentication operation involves providing, by the user, a password information, wherein the password information is preferably stored in the secure element of the second client device, preferably in encrypted form.

According to the present invention, any user interface element or plurality of user interface elements can be used for performing the authentication operation, e.g. a display of the second client device and/or a (soft) keyboard of the second client device and/or a touch screen of the second client device and/or biometric sensors, such as a finger print sensor, of the second client device. The password information is preferably a character string (letters and/or numbers and/or special characters) to be input by using a keyboard and/or a touch screen of the second client device. However, the password information can also be the result of a calculation executed upon a detection signal of a biometric sensor.

According to a further preferred embodiment of the present invention, the secure element is a subscriber identity module (SIM) or a universal subscriber identity module (USIM) located in the second client device, and wherein the second client device is preferably a mobile phone telephone device, the identification information being the MSISDN number (Mobile Station Integrated Services Digital Network Number).

Thereby, it is advantageously possible according to the present invention that a higher level of security can be reached as presently, large-scale fraud or misuse activities of SIM-card vulnerabilities have not been recorded yet.

Subscriber identity modules are usually present within such client devices having a mobile phone or cellular phone functionality (subscriber identity module according to the Global System of Mobile Communication (GSM) standard or Universal Subscriber Identity Module (USIM) according to the Universal Mobile Telecommunication System (UMTS) standard or other identification modules according to other standards such as Long Term Evolution (LTE) or the like. Thereby, it is advantageously possible that the network operator of the public land mobile network of the second client device is the identity provider for the application server, i.e. for the internet application requested by the user at the application server.

It is particularly important that the inventive method - by principle - is not vulnerable with regard to a number of internet threats such as attacks by Trojan programs or phishing attacks.

The first client device is preferably a computer device such as a personal computer (e.g. in the form of a regular PC (personal computer) or in the form of a laptop computer or in the form of a netbook computer or in the form of a tablet computer or the like). The first client device is usually connected to the application server by means of an internet connection.

According to the present invention, it is furthermore preferred that in a sixth step, preceding the first step, an authentication request requesting authentication of the user at the application server, is transmitted, by the first client device, to the application server.

It is furthermore preferred according to the present invention that the first and/or second authentication request information comprises a token information, the token information corresponding to the authentication request of the user at the application server in the sixth step.

Thereby, it is very advantageously possible according to the present invention, that a further increase of the level of security is possible according to the present invention: By means of the token information that corresponds to the authentication request of the user at the application server in the sixth step, it is possible for the user to verify that no parallel authentication or login attempts occur; the token information corresponding, e.g., to a session number of the login attempt of the user, carried out using the first client device. If such a session number is transmitted (as the token information) to the second client device / the secure element, and, e.g., displayed on a display device or another user interface element of the second client device, then it can simply be verified by the user, e.g., by comparing what is displayed on the second client device vs. what is displayed on the first client device.

According to the present invention, it is still furthermore preferred that the first and/or second authentication answer information comprises the token information in encrypted form, wherein the token information is encrypted by the secure element.

Thereby, it is advantageously possible that - alternatively to a verification of the token information by the user or cumulatively to a verification of the token information by the user - the token information is also checked by either the authentication server, i.e. typically the operator of the public land mobile network in which the second client device is a subscriber, or by the application server.

Furthermore, it is preferred according to the present invention that the first client device is connected to the application server via a first communication link and/or using a first communication network, and wherein the second client device is connected to the authentication server via a second communication link and/or using a second communication network, especially a public land mobile network.

Thereby, it is advantageously possible that in many cases different communication channels are used for the first client device communicating with the application server vs. for the second client device communicating with the authentication server.

Furthermore, it is preferred according to the present invention that the first authentication answer information is sent to the authentication server by means of using at least one out of an SMS message (short message system message) and an OTA message (Over The Air message).

Thereby, it is easily possible that this communication occurs in a simple yet safe manner.

The present invention further relates to a system for authenticating a user towards an application server, the system comprising a first client device, a second client device, the application server, and an authentication server, wherein the first client device is connected to the application server, wherein the second client device is used for authentication purposes of the user, wherein the second client device is connected to the authentication server and comprises a secure element, the secure element being configured to communicate with the authentication server, wherein the system is configured such that:
-- the application server transmits a first authentication request information to the authentication server, the authentication request information comprising an identification information assigned to the secure element,
-- the authentication server transmits a second authentication request information to the secure element,
-- a first authentication answer information is generated by the secure element and transmitted to the authentication server,
-- a second authentication answer information is transmitted by the authentication server to the application server, thereby authenticating the user.

According to the present invention - also with respect to the system - it is preferred that the secure element is configured such that, prior to generating and transmitting the first authentication answer information, an authentication operation of the user is requested by the secure element, wherein at least one user interface element of the second client device is used for performing the authentication operation, wherein the authentication operation involves providing, by the user, a password information, wherein the password information is preferably stored in the secure element, preferably in encrypted form.

Furthermore according to the present invention - also with respect to the system - it is preferred that the first and/or second authentication request information comprises a token information, the token information corresponding to the authentication request of the user at the application server.

Likewise, the other above mentioned advantages of the inventive method apply - mutatis mutandis - also to the inventive system.

Additionally, the present invention relates to a user equipment for authenticating a user towards an application server, the user equipment comprising a secure element and serving as a second client device in an inventive method according to the present invention.

Furthermore, the present invention relates to a secure element for authenticating a user towards an application server, the secure element being used in the inventive method of the present invention.

Likewise, the other above mentioned advantages of the inventive method and the inventive system apply - mutatis mutandis - also to the inventive user equipment and the inventive secure element.

Additionally, the present invention relates to a program comprising a computer readable program code which, when executed on a computer or on a secure element or on an application server or on an authentication server or in part on a secure element and in part on an application server and/or on an authentication server, causes the computer or the secure element or the application server or the authentication server to perform an inventive method according to the present invention.

Additionally, the present invention relates to a computer program product comprising a computer program stored on a storage medium, the computer program comprising program code which, when executed on a computer or on a secure element or on an application server or on an authentication server or in part on a secure element and in part on an application server and/or on an authentication server, causes the computer or the secure element or the application server or the authentication server to perform an inventive method according to the present invention.

### BRIEF DESCRIPTION OF THE DRAWINGS

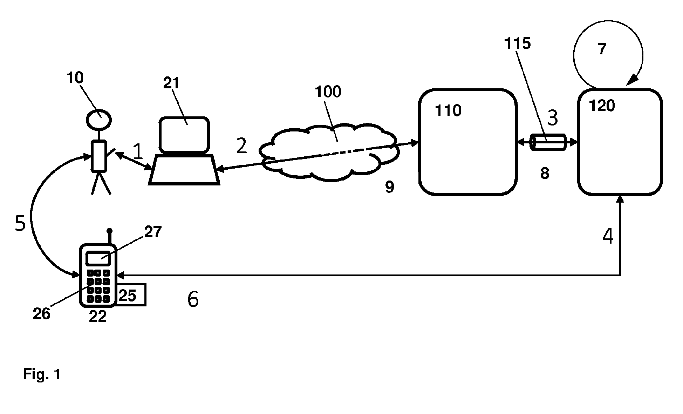

Figure 1 schematically illustrates a system according to the present invention showing the steps of the inventive method.

### DETAILED DESCRIPTION

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In Figure 1, an inventive system is schematically shown, illustrating also the inventive method. A first client device 21 is connected to an application server 110 via a communication network 100, especially an internet communication link or a communication link involving at least partly the (public) internet. A second client device 22, typically a mobile phone of the user 10, is connected (or can be connected) using a mobile communication network, especially involving a cellular network or a public land mobile network, to an authentication server 120, typically operated by the public land mobile network operator of the second client device. The second client device 22 comprises a secure element 25, typically a SIM-card. The application server 110 and the authentication server 120 are connected via a secured transmission line 115.

In a first processing step, designated by reference sign 1, the user 10 wants to request a service from the application server 110, typically using a browser software on the first client device 21 or any other application - especially when using a tablet computing device as the first client device 21. Such a requested service can, e.g., be an internet service or application involving the functionality of a social network, or an online-banking functionality, or any other internet related service. Especially, the first client device 21 might be an unsafe computing device, such as a computer in an internet café or the like. The user needs to be authenticated by the application server 110.

In a second processing step, designated by reference sign 2, the first client device 21 sends an authentication request, requesting authentication of the user at the application server 110, to the application server 110. The authentication request transmitted in the second processing step is routed using communication network 100. Typically, the authentication request comprises an identification information assigned to the secure element 25 of the second client device 22. Preferably, the identification information is the MSISDN number (Mobile Station Integrated Services Digital Network Number) of the second client device 22. However, a further identification information can be transmitted alternatively to the application server 110, e.g. a user name or an e-mail address, which might be stored in a database of the application server 110 (or accessible to the application server 110). In this case, the further identification information is correlated to the identification information (in the database of the application server 110) and can be translated to the identification information.

In a third processing step, designated by reference sign 3, the identification information is transmitted to the authentication server 120 - using the secure communication channel 115 - as the transmission of a first authentication request information to the authentication server 120. The third processing step 3, therefore, corresponds to the first step of the inventive method. The security of the secure communication channel 115 is typically realized by means of mutual authentication and usage of encryption technology for the exchange of data between the application server 110 and the authentication server 120, ensuring confidentiality and integrity of the data transmitted.

In a fourth processing step, designated by reference sign 4, the authentication server 120 sends a second authentication request information to the secure element 25 within the second client device 22. The fourth processing step 4, therefore, corresponds to the second step of the inventive method. The transmission of the second authentication request information is preferably done using a secure channel, e.g. an SMS message that is protected by usually applied protection mechanisms, such as the application of the A5/1 and/or A5/3 encryption methods, or by means of an OTA message (Over The Air message), likewise using cryptographic protection according to the OTA protocol. In this communication, of course, the radio interface of the second client device 22 is used for receiving the second authentication request information; however, the addressee of the second authentication request information is the secure element 25 of the second client device 22.

In a fifth processing step, designated by reference sign 5, an authentication operation of the user 10 is requested by the secure element 25. The fifth processing step 5, therefore, corresponds to the fifth step of the inventive method. At least one user interface element of the second client device 22 is used for performing the authentication operation. Typically, the authentication operation involves providing, by the user 10, of a password information. On the secure element 25, an application - typically a JavaCard application, preferably according to the SIM Application Toolkit (SAT) - is running. The secure element 25 controls, e.g., a dialog prompt on the second client device for interaction with the user 10, especially in the form of a pop up requesting a confirmation that the authentication should be performed and that the authentication is triggered upon a password information having been input. Other forms of user interaction are possible according to the present invention, e.g. in form of a finger print sensor or in form of other biometric sensors. After confirming and inputting of the password information by the user 10, the secure element 25 is able to further process the second authentication request information by generating a first authentication answer information. The password information is preferably stored in the secure element 25 of the second client device 22, preferably in encrypted form, and using mechanisms comparable to storing the SIM PIN (i.e. the personal identification number, used to lock or unlock the SIM card).

In a sixth processing step, designated by reference sign 6, after the user 10 has input the password information correctly (which is verified by the SIM application of the secure element 25), the SIM application executes a cryptographic operation and generates the first authentication answer information (i.e. a token), which is transmitted to the authentication server 120 (using, e.g., SMS or OTA mechanisms). The sixth processing step 6, therefore, corresponds to the third step of the inventive method. The cryptographic operation on the SIM card (or within the secure element 25) can be provided using symmetric (e.g. keyed hash, MAC) or asymmetric methods (e.g. signatures or certificates with private key). In essence, this cryptographic operation corresponds to signing the message such that what is expressed is (a) that the user 10 wants to request the particular service from the application server 110, and (b) the integrity of the transmitted data is safeguarded. The secret information, used to perform the cryptographic operation within the secure element 25, is likewise safely stored in the secure element 25 (SIM-card). The cryptographic algorithms can be adapted to the level of security required by the application requested at the application server 110. In case of using a symmetric cryptographic operation, the same (symmetric) key is also present and/or known at the authentication server 120, and is stored there in a secure manner (protected against unauthorized knowledge and/or manipulation). In case of using an asymmetric cryptographic operation, the public key corresponding to the private key stored on the secure element 25 is also present and/or known at the authentication server 120, and is stored there in a secure manner (protected against unauthorized knowledge and/or manipulation). This situation (of the same (identical) symmetric key or the corresponding (complementary) key being known or being stored on the secure element 25 (or SIM-card) and on the authentication server 120) can, e.g., be realized by means of storing these pieces of information - onto the secure element 25 (or SIM-card) as well as to the authentication server 120 - upon the personalization process of the secure element 25 (or SIM-card). Alternatively, the cryptographic keys can be stored onto the secure element 25 (or the SIM-card) by means of OTA commands (Over The Air commands), this even being possible for secure elements 25 (or SIM-cards) that are already used by the subscriber.

In a seventh processing step, designated by reference sign 7, the authentication server 120 receives the first authentication answer information (i.e. the token) and checks the validity of the first authentication answer information (or of the token) by means of the cryptographic key, stored either in the authentication server or such that the authentication server 120 can access the cryptographic key. Alongside the cryptographic key stored in the authentication server 120, additional pieces of information or parameters are stored such as "For which partner or for which service is the authentication requested?", "Which user or which session number or session identification should be authenticated?". Thereby, the authentication server 120 is able to check and validate the cryptographically protected statement of the user (to access a service of the application server 110) to be authenticated to use the requested service. The cryptographic validation assures the integrity of the user's statement such that an attacker is not able to simulate a faked statement without recognizing such an attack at either the second client device or at the authentication server 120. The result of checking the validity of the first authentication answer information (or of the token) is either a positive result of the check (i.e. the access to the application server 110 shall be granted to the user 10) or a negative result of the check (i.e. the access to the application server 110 shall not be granted to the user 10).

This result of the check is transmitted (using the secured transmission line 115) to the application server 110 in an eighth processing step, designated by reference sign 8. The result of the check, transmitted to the application server 110, corresponds to the second authentication answer information being transmitted by the authentication server 120 to the application server 110, thereby authenticating the user. The eighth processing step 8, therefore, corresponds to the fourth step of the inventive method.

Depending on the content of the second authentication answer information (i.e. positive or negative), the application server 110 either grants access to the service offered or rejects the access request in a ninth processing step, designated by reference sign 9.

In case of the use of a session number, the first authentication answer information (or token) generated by the secure element 25 is cryptographically linked to the token information, especially a session number, the token information corresponding to the authentication request ("session") of the user 10 at the application server 110. In the context of the present invention, "cryptographically linked" means, e.g., that the token information (or session number) is used when conducting the cryptographic operation generating the first authentication answer information. In order to protect the inventive method against an attack pattern trying to access the application server simultaneously with the user 10, the application server 110 can provide the token information (or session number or session identification or session id), typically a string of characters, either only numbers or also letters, e.g. on a display device of the first client device 21. The same token information is also displayed by the second client device 22 (due to the transmission - as part of the first authentication request information - from the application server 110 to the authentication server 120 in the first step of the inventive method, and due to the transmission - as part of the second authentication request information - from the authentication server 120 to the secure element 25 in the second step of the inventive method). The user 10 is able to perform the verification whether both representations of the token information are equal. Accordingly, the token information should be long enough to avoid a brute force attack but short enough not to reduce user-friendlyness.

## Claims

1. Method for authenticating a user (10) towards an application server (110), the user (10) having a first client device (21) being connected to the application server (110), wherein a second client device (22) is used for authentication purposes of the user (10) towards the application server (110), wherein the second client device (22) is connected to an authentication server (120) and comprises a secure element (25) being able to communicate with the authentication server (120), wherein the method comprises the steps of:
-- in a first step, the application server (110) transmits a first authentication request information to the authentication server (120), the first authentication request information comprising an identification information assigned to the secure element (25),
-- in a second step, subsequent to the first step, the authentication server (120) transmits a second authentication request information to the secure element (25),
-- in a third step, subsequent to the second step, a first authentication answer information is generated by the secure element (25) and transmitted to the authentication server (120),
-- in a fourth step, subsequent to the third step, a second authentication answer information is transmitted by the authentication server (120) to the application server (110), thereby authenticating the user (10).

2. Method according to claim 1, wherein the secure element (25) is a subscriber identity module (SIM) or a universal subscriber identity module (USIM) located in the second client device (22), and wherein the second client device (12) is preferably a mobile phone telephone device, the identification information being the MSISDN number (Mobile Station Integrated Services Digital Network Number).

3. Method according to one of the preceding claims, wherein in a fifth step, subsequent to the second step and preceding the third step, an authentication operation of the user (10) is requested by the secure element (25), wherein at least one user interface element of the second client device (22) is used for performing the authentication operation, wherein the authentication operation involves providing, by the user (10), a password information, wherein the password information is preferably stored in the secure element (25) of the second client device (22), preferably in encrypted form, the password information being preferably a character string or the result of a calculation executed upon a detection signal of a biometric sensor.

4. Method according to one of the preceding claims, wherein in a sixth step, preceding the first step, an authentication request requesting authentication of the user (10) at the application server (110), is transmitted, by the first client device (21), to the application server (110).

5. Method according to one of the preceding claims, wherein the first and/or second authentication request information comprises a token information, the token information corresponding to the authentication request of the user (10) at the application server (110) in the sixth step.

6. Method according to one of the preceding claims, wherein the first and/or second authentication answer information comprises the token information in encrypted form, wherein the token information is encrypted by the secure element (25).

7. Method according to one of the preceding claims, wherein the first client device (21) is connected to the application server (110) via a first communication link (100) and/or using a first communication network (100), and wherein the second client device (22) is connected to the authentication server (120) via a second communication link and/or using a second communication network, especially a public land mobile network.

8. Method according to one of the preceding claims, wherein the first authentication answer information is sent to the authentication server (120) by means of using at least one out of an SMS message (short message system message) and an OTA message (Over The Air message).

9. System for authenticating a user (10) towards an application server (110), the system comprising a first client device (21), a second client device (22), the application server (110), and an authentication server (120), wherein the first client device (21) is connected to the application server (110), wherein the second client device (22) is used for authentication purposes of the user (10), wherein the second client device (22) is connected to the authentication server (120) and comprises a secure element (25), the secure element being configured to communicate with the authentication server (120), wherein the system is configured such that:
-- the application server (110) transmits a first authentication request information to the authentication server (120), the authentication request information comprising an identification information assigned to the secure element (25),
-- the authentication server (120) transmits a second authentication request information to the secure element (25),
-- a first authentication answer information is generated by the secure element (25) and transmitted to the authentication server (120),
-- a second authentication answer information is transmitted by the authentication server (120) to the application server (110), thereby authenticating the user (10).

10. System according to claim 9, wherein the secure element (25) is configured such that, prior to generating and transmitting the first authentication answer information, an authentication operation of the user (10) is requested by the secure element (25), wherein at least one user interface element of the second client device (22) is used for performing the authentication operation, wherein the authentication operation involves providing, by the user (10), a password information, wherein the password information is preferably stored in the secure element (25), preferably in encrypted form, the password information being preferably a character string or the result of a calculation executed upon a detection signal of a biometric sensor.

11. System according to one of claims 9 or 10, wherein the first and/or second authentication request information comprises a token information, the token information corresponding to the authentication request of the user (10) at the application server (110).

12. User Equipment for authenticating a user (10) towards an application server (110), the user equipment comprising a secure element (25) and serving as a second client device (22) in a method according one of claims 1 to 8 and/or in a system according to one of claims 9 to 11.

13. Secure element (25) for authenticating a user (10) towards an application server (110), the secure element (25) being used in a method according to one of claims 1 to 8 and/or in a system according to one of claims 9 to 11.

14. Program comprising a computer readable program code which, when executed on a computer or on a secure element (25) or on an application server (110) or on an authentication server (120) or in part on a secure element (25) and in part on an application server (110) and/or on an authentication server (120), causes the computer or the secure element (25) or the application server (110) or the authentication server (120) to perform a method according one of claims 1 to 8.

15. Computer program product comprising a computer program stored on a storage medium, the computer program comprising program code which, when executed on a computer or on a secure element (25) or on an application server (110) or on an authentication server (120) or in part on a secure element (25) and in part on an application server (110) and/or on an authentication server (120), causes the computer or the secure element (25) or the application server (110) or the authentication server (120) to perform a method according one of claims 1 to 5.
